# EUROPEAN PATENT APPLICATION

(11) **EP 2 065 621 A2**
(43) Date of publication of application: **03.06.2009**
(21) Application number: 08168366.6
(22) Date of filing: 05.11.2008
(51) Int. Cl.: F16H 57/04

(54) **Fluid filter for automatic transmission and installation method for the same**

(30) Priority: 27.11.2007 JP 2007306389
(71) Applicant: Toyota Boshoku Kabushiki Kaisha, Kariya-shi, Aichi-ken 448-8651 (JP)
(72) Inventor: Morishita, Hideto, Kariya-shi, Aichi 448-8651 (JP); Yamaguchi, Shuji, Kariya-shi, Aichi 448-8651 (JP)
(74) Representative: TBK-Patent

(57) **Abstract**

A fluid filter (1A) is provided with: a case member (4) that is installed on a valve body (2) in which fluid paths are formed and forms a filter chamber (3) in cooperation with the valve body; a filter element (10) that is disposed in the filter chamber and includes a filter medium (11) and a resin supporting frame (12) that supports the outer peripheral edge of the filter medium; and a seal member (15) that is in pressure contact with the surface of the inner peripheral side of the upper end portion of the peripheral wall of the case member, the surface of the outer peripheral side of the upper end portion of the supporting frame, and the surface of the valve body.

## Description

### BACKGROUND OF THE INVENTION

### 1. Field of the Invention

The present invention relates to fluid filters for automatic transmissions and an installation method for the same, and in particular, relates to fluid filters for automatic transmissions that enable cost reductions by reducing the number of parts, enable a simple installation irrespective of the material, shape or the like of a valve body, and enable further improvement of the reliability of the seal, and an installation method for the same.

### 2. Description of the Related Art

A conventional fluid filter for an automatic transmission that is generally known is one in which a filter element is disposed inside a filter chamber that is formed between an upper case and a lower case, and an outlet pipe that is provided in the upper case is inserted into a discharge outlet that is formed in a valve body with an O-ring interposed therebetween (refer, for example, to Patent Document 1).
However, the conventional fluid filter for an automatic transmission is mainly structured by three parts, that is, the upper case, the lower case, and the filter element, and thus, there are many parts and the cost becomes high.

Thus, as technology for solving this problem, a fluid filter for an automatic transmission has been proposed in which the upper case is omitted, and the fluid filter is structured by two main parts: a lower case, which is directly installed on the valve body, and a filter element (refer, for example, to Patent Documents 2 and 3).

As shown in FIG. 9, Patent Document 2 discloses, for example, a fluid filter for an automatic transmission in which a filter medium 111 is interposed between a flange of a cover member 103 that is integrally formed on a resin valve body 102 and a flange of a resin base member 104 (lower case), and vibration welded (refer to paragraph [0020] in Patent Document 2).

As shown in FIG. 10, Patent Document 3 discloses, for example, a fluid filter for an automatic transmission provided with a filter element 110 that is formed by integrating a filter medium 111, a flat metal frame 113, and a resin frame 112. In the fluid filter, the outer peripheral edge of the metal frame 113 of the filter element 110 is folded back and crimped onto a flange of a lower body 104 (lower case), and the metal frame 113 and the lower body 104 are fastened by bolts 116 to the valve body 102 (refer, for example, to paragraphs [0019] and [0020], and FIG. 1 of Patent Document 3).

[Patent Document 1] Japanese Patent Application Publication No. JP-A-H8-4886
[Patent Document 2] Japanese Patent Application Publication No. JP-A-2004-52820
[Patent Document 3] Japanese Patent Application Publication No. JP-A-H10-272312

However, in Patent Document 2, because the valve body and the base member are integrated by using vibration welding, a valve body that is generally made of aluminum must be changed to one that is made of resin. Moreover, the shape of the valve body must be significantly modified, and therefore, in the present situation, this fluid filter for an automatic transmission cannot be easily implemented by vehicle manufactures that manufacture automatic transmissions that include valve bodies.
Furthermore, a process in which the valve body and the base member are subject to vibration welding is necessary. Therefore, even if the number of parts is reduced, the number of processes cannot be reduced, and thus there are also limits to the cost reductions.

In addition, in Patent Document 3, because a filter element is used that is formed by integrating the filter medium, the metal frame, and the resin frame, the filter element and thus the fluid filter for an automatic transmission become comparatively expensive.
Furthermore, because sealing is carried out by using a flat metal frame, in order to increase the reliability of the seal, it is necessary to fasten the metal frame securely to the valve body by using a large number of bolts, and thus the installation operation becomes complicated.

### SUMMARY OF THE INVENTION

In consideration of the present circumstances, it is an object of the present invention to provide a fluid filter for an automatic transmission that enables cost reductions by reducing the number of parts, enables a simple installation irrespective of the material, shape or the like of a valve body, and enables further improvement of the reliability of the seal, and an installation method for the same.

The present invention is as follows.

### What is claimed is:

1. A fluid filter for an automatic transmission, comprising:
   a case member that is installed on a valve body in which a fluid path is formed and that forms a filter chamber in cooperation with said valve body;
   a filter element that is disposed inside said filter chamber and has a filter medium and a resin supporting frame that supports an outer peripheral edge of said filter medium; and
   a seal member that is in pressure contact with a surface of an inner peripheral side of an upper end portion of a peripheral wall of said case member, a surface of an outer peripheral
   side of an upper end portion of said supporting frame, and a surface of said valve body.
2. The fluid filter for an automatic transmission according to 1 above, wherein said seal member is disposed in a notched portion that is formed on at least one side among the inner peripheral side of the upper end portion of the peripheral wall of said case member and the outer peripheral side of the upper end portion of said supporting frame.
3. The fluid filter for an automatic transmission according to 1 above, wherein said supporting frame is fit in an inner peripheral side of the peripheral wall of said case member with a predetermined space, and said seal member has a press fitting portion that is press fit into said predetermined space.
4. The fluid filter for an automatic transmission according to any one of 1 to 3 above, wherein said case member has a locking hook that is locked to a locking portion that is provided in said valve body, and an elastic supporting portion that elastically supports said locking hook.
5. An installation method for a fluid filter for an automatic transmission comprising the steps of:
   disposing a filter element having a filter medium and a resin supporting frame that supports an outer peripheral edge of said filter medium inside a case member and disposing said seal member between an inner peripheral side of an upper end portion of a peripheral wall of said case member and an outer peripheral side of an upper end portion of said supporting frame (a first step); and
   installing said case member on a valve body in which a fluid path is formed such that said seal member is in pressure contact with said valve body (a second step).

According to the fluid filter for an automatic transmission of the present invention, the upper case is eliminated and the case member is installed on the valve body by the bolt, the locking hook or the like, and thus, in comparison to a conventional fluid filter in which the valve body and the case member are integrated by using vibration welding, it is possible to realize a reduction in costs by reducing the number of parts and the number of processes, and it is possible to install the fluid filter for an automatic transmission easily irrespective of the material, shape or the like of the valve body. In addition, because a filter element is used that includes a filter medium and a supporting frame, in comparison to a conventional fluid filter that uses a filter element that is formed by integrally forming a filter medium, a metal frame, and a resin frame, it is possible to realize further cost reductions of the filter element and thus the fluid filter for an automatic transmission.
Furthermore, the fluid filter for an automatic transmission of the present invention is provided with a seal member that is in pressure contact with the surface of the inner peripheral side of the upper end portion of the peripheral wall of the case member, the surface of the outer peripheral side of the upper end portion of the supporting frame, and the surface of the valve body. Thus, the space between the case member and the supporting frame is maintained in a fluid-tight state due to the seal member, and it is possible to prevent contaminated fluid from flowing into the clean side without passing through the filter medium. Also, the space between the case member and the valve body is maintained in an air-tight state, and it is possible to prevent air from being drawn into the filter chamber. Therefore, in comparison to a conventional fluid filter in which sealing is carried out by using a flat metal frame, it is possible to improve the reliability of the seal without requiring a complicated installation operation.
In addition, in the case in which the seal member is disposed in the notched portion that is formed on at least one side among the inner peripheral side of the upper end portion of the peripheral wall of the case member and the outer peripheral side of the upper end portion of the supporting frame, the seal member is positioned inside the notched portion, and thus it is possible to prevent the misalignment of the seal member when installing the case member on the valve body.
In addition, in the case in which the supporting frame is fit in the inner peripheral side of the peripheral wall of the case member with a predetermined space and the seal member has a press fitting portion that is press fit into the predetermined space, the case member, the filter element, and the seal member are integrated due to the press fitting of the press fitting portion of the seal member into the predetermined space, and thus it is possible to install the fluid filter for an automatic transmission more easily on the valve body. In addition, it is possible to prevent the misalignment of the seal member when the case member is installed on the valve body. Furthermore, the handling characteristics during transport, storing and the like of the fluid filter for an automatic transmission are superior.
Furthermore, in the case in which the case member has the locking hook and the elastic supporting frame, accompanying the elastic deformation of the elastic supporting portions, the case member is installed in the valve body due to the locking of the locking hook into the locking portion that is provided in the valve body. Therefore, it is possible to install the fluid filter for an automatic transmission more easily on the valve body.

According to the installation method for the fluid filter for an automatic transmission, the upper case is eliminated, and the case member is installed on the valve body by using bolts, locking hooks or the like, and thus, in comparison to a conventional fluid filter in which a valve body and a case member are integrated by using vibration welding, it is possible to realize a reduction in costs by reducing the number of parts and the number of processes, and in addition, it is possible to install the fluid filter for an automatic transmission easily irrespective of the material, shape and the like of the valve body. In addition, the filter element that has the filter medium and the supporting frame is used, and thus, in comparison to a conventional fluid filter that uses a filter element that is formed by integrating a filter medium, a metal frame, and a resin frame, it is possible to realize further cost reductions of the filter element and thus the fluid filter for an automatic transmission. Furthermore, the seal member is provided that is in pressure contact with the surface of the inner peripheral side of the upper end portion of the peripheral wall of the case member, the surface of the outer peripheral side of the upper end portion of the supporting frame, and the surface of the valve body, and thus the space between the case member and the supporting frame is maintained in a fluid-tight state by the seal member, it is possible to prevent contaminated fluid from flowing into the clean side without passing through the filter medium, and in addition, the space between the case member and the valve body is maintained in an air-tight state, and it is possible to prevent air from being drawn into the filter chamber. Therefore, in comparison to a conventional fluid filter in which sealing is carried out by a flat metal frame, it is possible to improve the reliability of the seal without requiring a complicated installation operation.

### BRIEF DESCRIPTION OF THE DRAWINGS

FIG. 1 is a longitudinal cross-sectional view of a fluid filter for an automatic transmission according to a first embodiment;
FIG 2 is an enlarged view of the main parts of FIG. 1;
FIG. 3 is an explanatory drawing for explaining an installation method for the fluid filter for an automatic transmission according to the first embodiment;
FIG. 4 is a longitudinal cross-sectional view of the main parts of a fluid filter for an automatic transmission according to a second embodiment;
FIG 5 is a longitudinal cross-sectional view of the main parts of a fluid filter for an automatic transmission according to a third embodiment;
FIG. 6 is an explanatory drawing for explaining an installation method for the fluid filter for an automatic transmission according to the third embodiment;
FIG. 7 is a longitudinal cross-sectional view of the main parts of a fluid filter for an automatic transmission according to a fourth embodiment;
FIG 8 is an explanatory drawing for explaining an installation method for the fluid filter for an automatic transmission according to the fourth embodiment;

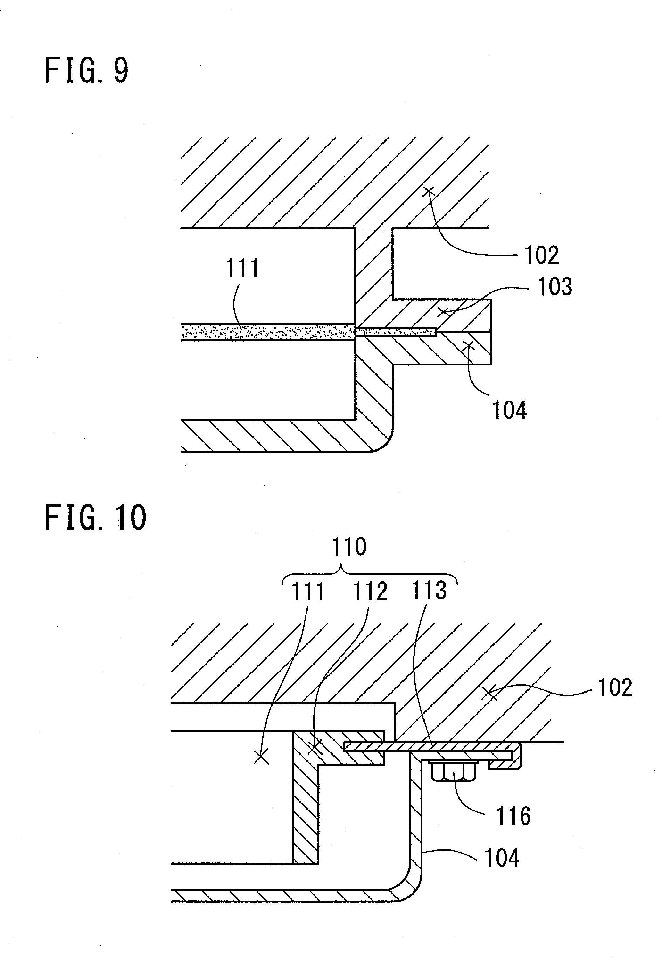

FIG. 9 is an explanatory drawing for explaining a conventional fluid filter for an automatic transmission; and
FIG 10 is an explanatory drawing for explaining another conventional fluid filter for an automatic transmission.

### DETAILED DESCRIPTION OF THE PREFERRED EMBODIMENTS

### 1. Fluid filter for an automatic transmission

A fluid filter for an automatic transmission according to a first embodiment is provided with a case member, a filter element, and a seal member, which will be described below.

The structure, shape, material and the like of the "case member" described above are not particularly limited provided that the case member is installed on a valve body in which fluid paths are formed and forms the filter chamber in cooperation with the valve body. Examples of the material for the case member include resins and metals such as aluminum and iron. Among these, a resin is preferable in terms of weight reduction.
Note that examples of the material for the valve body include metals such as aluminum and iron, and resins. Among these, a metal is preferable in terms of high strength and high precision.

The case member may have, for example, installation portions (for example, female screw portions or holes or the like) for bolts that are screwed into the valve body. However, in terms of enabling the improvement in the installation characteristics of the fluid filter for an automatic transmission, the case member preferably includes locking hooks that lock to locking portions that are provided in the valve body and elastic support portions that elastically support these locking hooks.

The structure, shape, layout and the like of the "filter element" described above are not particularly limited provided that the filter element is disposed inside the filter chamber and that it includes a filter medium and a resin supporting frame that supports the outer peripheral edge of the filter medium. Examples of the shape of this filter medium include pleated shape, a sheet shape, a wave shape, and a bag shape. In addition, examples of the material for the filter medium include a non-woven fabric, a woven fabric, paper and the like.
The filter element described above can be formed, for example, by integrally molding the filter medium and the supporting frame by using insert molding.

The structure, shape, material and the like of the "seal member" described above are not limited in particular provided that the seal member is in pressure contact with the inner peripheral side of the upper end portion of the peripheral wall of the case member, the outer peripheral side of the upper end portion of the supporting frame, and the valve body. Examples of the seal member include an O-ring, a V-ring, an irregular-shaped ring and the like. In addition, examples of the material for the seal member include rubbers, resins, metals and the like.

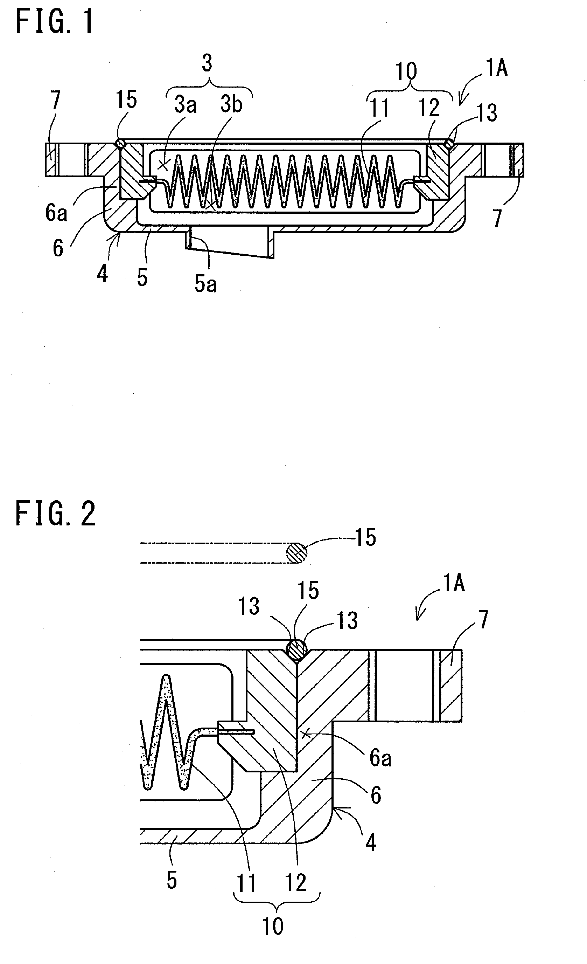

Here, examples of the fluid filter for an automatic transmission described above include a configuration in which the seal member is disposed in a notched portion that is formed on at least one side among an inner peripheral side of an upper end portion of the peripheral wall of the case member and an outer peripheral side of an upper end portion of the supporting frame (refer to FIG 2).

In the case of the configuration described above, for example, the filter element can be disposed inside the filter chamber such that an upper end surface of the peripheral wall of the case member and an upper end surface of the supporting frame are set at substantially identical height levels. Thereby, it is possible to use a seal member that has a comparatively simple structure, such as an O-ring.

In the case of the configuration described above, for example, the supporting frame can be fit into and fastened to the inner peripheral side of the peripheral wall of the case member. Because the filter element and the case member are integrated due to the fitting attachment, it is possible to install the fluid filter for an automatic transmission more easily on the valve body.

In the case of the configuration described above, for example, the seal member can be disposed by being press fit into the notched portion. Because the case member, the filter element, and the seal member are integrated due to the press fit disposition, it is possible to install the fluid filter for an automatic transmission more easily on the valve body. In addition, the handling characteristics during transport, storing or the like of the fluid filter for an automatic transmission are superior.

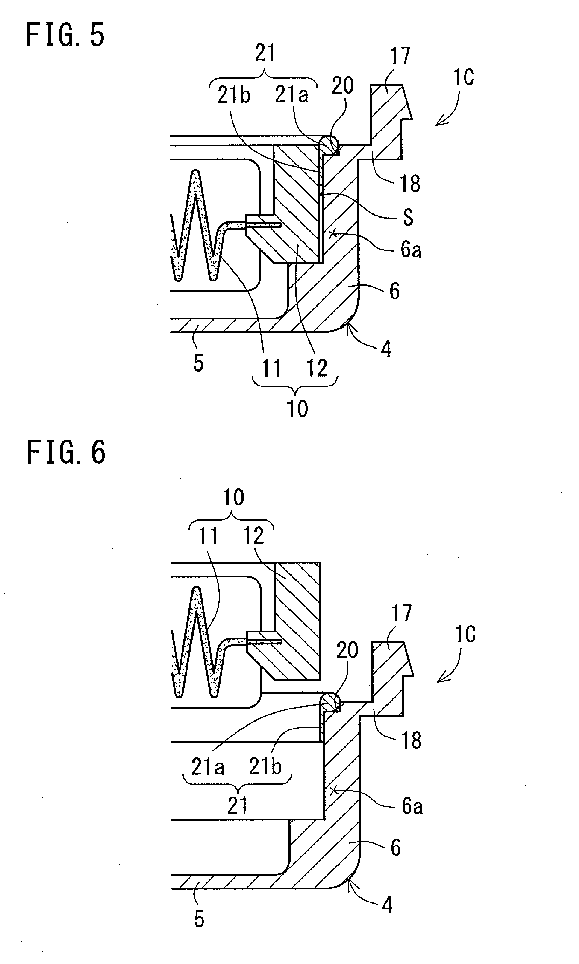

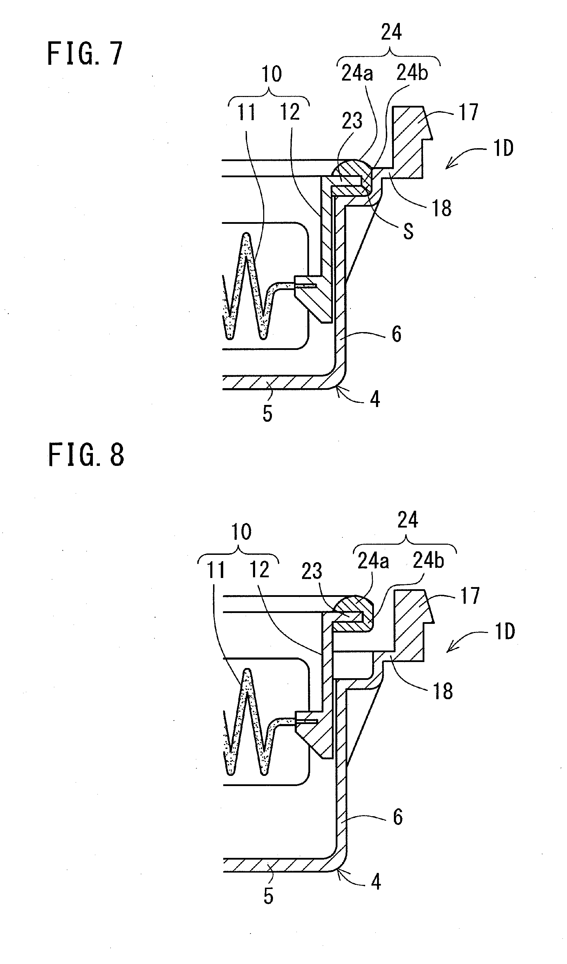

Here, examples of the fluid filter for an automatic transmission include a configuration in which the supporting frame is fit in the inner peripheral side of the peripheral wall of the case member with a predetermined space, and the seal member has a press fitting portion that is press fit into the predetermined space (refer to FIG. 5 and FIG. 7). The press fitting portion can be provided, for example, over the entire periphery of the seal member. Thereby, it is possible to maintain the fluid-tight state between the case member and the supporting frame more reliably.
Examples of the press fitting portion include a configuration (1) in which the press fitting portion is formed into a plate shape that extends downward from the main seal portion (refer to FIG. 5), and a configuration (2) in which the press fitting portion is formed so as to have a substantially L-shape in longitudinal cross-section that is linked downward from the main seal portion (refer to FIG. 7). In configuration (2), the press fitting portion can preferably be locked to the locking portion that is formed at the outer peripheral side of the upper end portion of the supporting frame. This is because the press fitting portion is easily press fit into the predetermined space between the case member and the supporting frame.

In the case of the configuration described above, for example, the filter element can be disposed inside the filter chamber such that the upper end surface of the peripheral wall of the case member and the upper end surface of the supporting frame are set at substantially identical height levels. Thereby, it is possible to use a seal member that has a comparatively simple structure.

### 2. Installation method for the fluid filter for an automatic transmission

An installation method for the fluid filter for an automatic transmission according to a second embodiment includes a first step and a second step that will be described below.

The disposition order, timing and the like of the "first step" are not limited in particular provided that the first step is a step in which a filter element that has a filter medium and a supporting frame that supports the outer peripheral edge of the filter medium is disposed inside the case member and the seal member is disposed between the inner peripheral side of the upper end portion of the peripheral wall of the case member and the outer peripheral side of the upper end portion of the supporting frame. In particular, the order of the disposition of the filter element and the disposition of the seal member is not limited in particular, and the disposition of both the filter element and the seal member may be carried out substantially simultaneously.
Note that, for example, the structures of the members that have been explained in the first embodiment described above can be used as the filter element, the case member, and the seal member.

Here, examples of the first step described above include a configuration in which, first, the filter element is disposed inside the case member, and subsequently the seal member is disposed in the notched portion that is formed on at least one side among the inner peripheral side of the upper end portion of the peripheral wall of the case member and the outer peripheral side of the upper end portion of the supporting frame (refer to FIG. 2). Thereby, because the seal member is positioned in the notched portion, it is possible to install the fluid filter for an automatic transmission more easily on the valve body.

In the case of the configuration described above, for example, the filter element is disposed inside the case member, and it is possible to set the upper end surface of the peripheral wall of the case member and the upper end surface of the supporting frame at substantially identical height levels. Thereby, it is possible to use a seal member that has a comparatively simple structure, such as an O-ring.

In the case of the configuration described above, it is possible, for example, to dispose the filter element inside the case member by fitting and fastening the supporting frame inside the inner peripheral side of the peripheral wall of the case member. Because the filter element and the case member are integrated due to the fitting attachment, it is possible to install the fluid filter for an automatic transmission more easily on the valve body.

In the case of the configuration described above, it is possible, for example, to press fitting and dispose the seal member into the notched portion. Because the case member, the filter element, and the seal member are integrated due to the press fitting disposition, it is possible to install the fluid filter for an automatic transmission more easily on the valve body. Furthermore, the handling characteristics during transport, storing or the like of the fluid filter for an automatic transmission are superior.

Here, examples of the first step described above include the following two configurations. In configuration (1), first, the seal member is disposed in a positioning portion that is formed on the inner peripheral side of the upper end portion of the peripheral wall of the case member, and subsequently, the filter element is disposed inside the case member by fitting the supporting frame in the inner peripheral side of the peripheral wall of the case member with a predetermined space, and the press fitting portion of the seal member is press fit into the predetermined space (refer to FIG. 6). In configuration (2), first, the seal member is disposed in a positioning portion that is formed on the outer peripheral side of the upper end portion of the supporting frame, and subsequently, the filter element is disposed inside the case member by fitting the supporting frame in the inner peripheral side of the peripheral wall of the case member with a predetermined space, and the press fitting portion of the seal member is press fit into the predetermined space (refer to FIG. 8). Examples of the positioning portion include, for example, the notched portion into which the seal member is inserted or press fit, the locking portion by which the seal member can be locked, and the like.
According to configurations (1) and (2) described above, because the case member, the filter element, and the seal member are integrated due to the press fitting of the press fitting portion of the seal member into the predetermined space, it is possible to install the fluid filter for an automatic transmission on the valve body more easily. Furthermore, the handling characteristics during transport, storing and the like of the fluid filter for an automatic transmission are superior.

In configurations (1) and (2) described above, for example, it is possible to dispose the filter element inside the case member and to set the upper end surface of the peripheral wall of the case member and the upper end surface of the supporting frame at substantially identical height levels, and it is possible to press fit the press fitting portion of the seal member into the predetermined space. Thereby, it is possible to use a seal member that has a comparatively simple structure.

The installation configuration, timing and the like of the "second step" described above are not limited in particular provided that the second step is a step in which the case member is installed on the valve body in which fluid paths are formed and the seal member is in press contact with the valve body. Due to this second step, the seal member is crimped onto the surface of the inner peripheral side of the upper end portion of the peripheral wall of the case member, the surface of the outer peripheral side of the upper end potion of the supporting frame, and the surface of the valve body.

The second step may be a step in which, for example, the case member is fastened by bolts to the valve body via installation portions (for example, a female screw portion, a hole portion, or the like) that are provided in the case member, but in terms of enabling the improvement of the installation characteristics of the fluid filter for an automatic transmission, the second step is preferably a step in which the case member is installed on the valve body by the locking of locking hooks that are elastically supported by the case member in the locking portions that are provided in the valve body.

### Embodiments

Below, the present invention will be explained in detail by a first embodiment through a fourth embodiment with reference to the figures.

### First Embodiment

### 1. Structure of the fluid filter for an automatic transmission

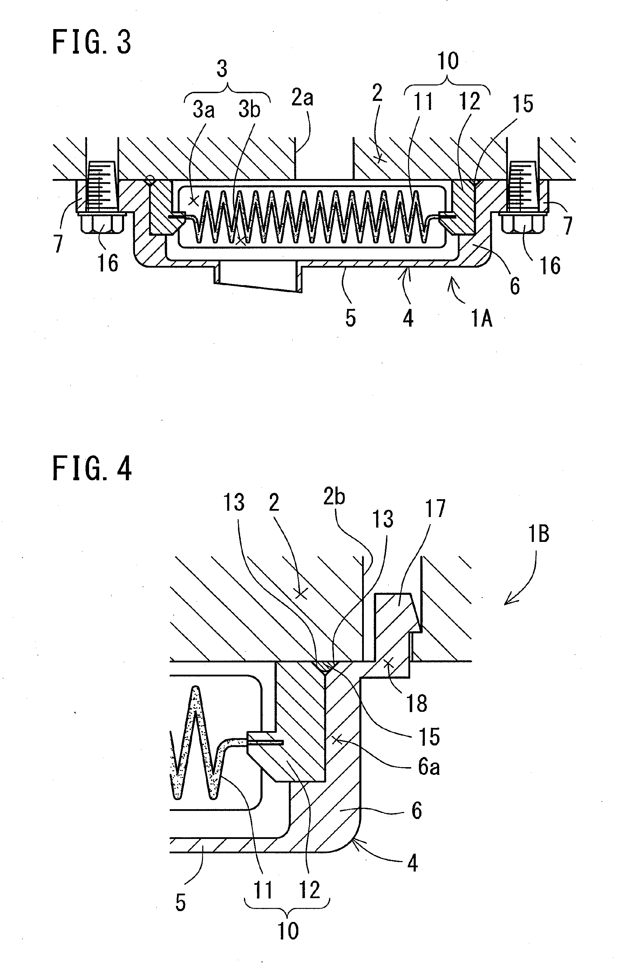

As shown in FIG. 1 and FIG. 2, the fluid filter 1A for an automatic transmission according to the first embodiment is provided with a resin case member 4 that is installed on an aluminum valve body 2 (refer to FIG 3) that has a plurality of fluid paths (not illustrated) formed therein, and form a filter chamber 3 in cooperation with the valve body 2. The case member 4 includes a bottom wall 5 in which an inlet 5a for fluid is formed and a peripheral wall 6 that rises from an outer peripheral edge of the bottom wall 5. A plurality of installation portions 7 for receiving the installation bolts 16 (refer to FIG. 3) are provided on an outer peripheral side of an upper end portion of the peripheral wall 6.
Note that spool valves (not illustrated) are provided in the fluid paths of the valve body 2, and clutches of the automatic transmission are switched in response to the switching of the fluid paths by the spool valves.

A filter element 10 that partitions the filter chamber 3 into an upper clean side 3a and a lower contaminated side 3b is disposed inside the filter chamber 3. The filter element 10 is formed by integrating a pleated non-woven fiber filter medium 11 and a resin supporting frame 12 that supports an outer peripheral edge side of the filter medium 11. The supporting frame 12 is fit into and fastened to a step shaped portion 6a that is formed on an inner peripheral side of the peripheral wall 6 of the case member 4. In addition, an upper end surface of the supporting frame 12 and an upper end surface of the peripheral wall of the case member 4 are set at substantially identical height levels.

Beveled notched portions 13 are respectively formed on an inner peripheral side of the upper end portion of the peripheral wall 6 of the case member 4 and an outer peripheral side of the upper end portion of the supporting frame 12. A seal member 15, which is a rubber O-ring, is press fit and disposed in the notched portions 13. In the state in which the case member 4 is installed on the valve body 2, the seal member 15 is in pressure contact with the surface of the notched portion 13 of the peripheral wall 6 of the case member, the surface of the notched portion 13 of the supporting frame 12, and the surface of the valve body 2 (refer to FIG. 3). Therefore, the space between the case member 4 and the supporting frame 12 is maintained in a fluid-tight state by the seal member 15, and at the same time, the space between the case member 4 and the valve body 2 is maintained in an air-tight state.

### 2. Installation method for the fluid filter for an automatic transmission

Next, an installation method for the fluid filter A1 for an automatic transmission having the structure described above will be explained.
First, as shown in FIG 2, the filter element 10 is disposed inside the case member 4 by fitting and fixing the supporting frame 12 to the inner peripheral side of the peripheral wall 6 of the case member 4, and the upper end surface of the peripheral wall 6 of the case member 4 and the upper end surface of the supporting frame 12 are set at substantially identical height levels. Next, the seal member 15 is press fit into and disposed in the notched portions 13 that are formed in the peripheral wall 6 of the case member 4 and the supporting frame 12. Next, as shown in FIG. 3, the upper end surface of the peripheral wall 6 of the case member 4 and the upper end surface of the supporting frame 12 are set on an installation surface of the valve body 2 so as to cover a discharge outlet 2a of the valve body 2, and the seal member 15 is in pressure contact with valve body 2. Subsequently, the case 4 is fastened by the bolts 16 to the valve body 2 via the installation portions 7 of the case member 4, and thereby the fluid filter 1A for an automatic transmission is installed.

### 3. Effects of the first embodiment

According to the above, in the first embodiment, the upper case is eliminated, and the case 4 is installed on the valve body 2 by being fastened by the bolts 16. Therefore, in comparison to the conventional fluid filter in which the valve body and the case member are integrated by using vibration welding, it is possible to reduce the cost by reducing the number of parts and the number of processes, and in addition, it is possible to install the fluid filter 1A for an automatic transmission easily irrespective of the material, shape or the like of the valve body 2.

In addition, in the first embodiment, the filter element 10 that is formed by integrating the filter medium 11 and the supporting frame 12 is used. Therefore, in comparison to the conventional fluid filter in which a filter element is used that is formed by integrating the filter medium, the metal frame, and the resin frame, it is possible to realize further cost reductions of the filter element 10 and thus the fluid filter 1A for an automatic transmission

In addition, in the first embodiment, the seal member 15 is provided that is in pressure contact with the surface of the inner peripheral side of the upper end portion of the peripheral wall 6 of the case member 4, the surface of the outer peripheral side of the upper end portion of the supporting frame 12, and the surface of the valve body 2. Therefore, the space between the case member 4 and the supporting frame 12 is maintained in a fluid-tight state by this seal member 15, and it is possible to prevent contaminated fluid from flowing to the clean side 3a without passing through the filter medium 11. In addition, the space between the case member 4 and the valve body 2 is maintained in an air-tight state, and it is possible to prevent air from being drawn into the filter chamber 3. Therefore, in comparison to carrying out the conventional sealing by using a flat metal frame, it is possible to improve the reliability of the seal without requiring a complicated installation operation.

In addition, in the first embodiment, the filter element 10 is disposed inside the filter chamber 3 such that the upper end surface of the peripheral wall 6 of the case member 4 and the upper end surface of the supporting frame 12 are set at substantially identical height levels, and thus it is possible to use a seal member that has a comparatively simple structure, such as an O-ring, as the seal member 15.

Furthermore, in the first embodiment, the supporting frame 12 is fit into and fastened to the inner peripheral side of the peripheral wall 6 of the case member 4, and the seal member 15 is press fit and disposed inside the notched portions 13 that are formed in the peripheral wall 6 of the case member 4 and the supporting frame 12, and thus, it is possible to integrate the case member 4, the filter element 10, and the seal member 15, and it is possible to install the fluid filter 1A for an automatic transmission on the valve body 2 more easily. In addition, it is possible to prevent the misalignment of the seal member 15 when installing the case member 4 onto the valve body 2. Furthermore, the handling characteristics during transport, storing or the like of the fluid filter 1A for an automatic transmission are superior.

### Second embodiment

Next, a fluid filter for an automatic transmission according to a second embodiment will be explained. Note that in the fluid filter for an automatic transmission according to the second embodiment, structural components that are substantially identical to those of the fluid filter 1A for an automatic transmission of the first embodiment have identical reference numerals appended thereto, and the detailed explanations thereof are omitted.

### 1. Structure of the fluid filter for an automatic transmission

As shown in FIG. 4, in the fluid filter 1B for an automatic transmission according to the second embodiment, a locking hook 17 that is locked onto a stepped locking portion 2b that is provided in the valve body 2 and an elastic supporting portion 18 that elastically support the locking hook 17 is provided on the outer peripheral side of the upper end portion of the peripheral wall 6 of the case member 4.

### 2. Installation method for the fluid filter for an automatic transmission

Next, an installation method for the fluid filter 1B for an automatic transmission having the structure described above will be explained.
First, the filter element 10 is disposed inside the case member 4, and the upper end surface of the peripheral wall 6 of the case member 4 and the upper end surface of the supporting frame 12 are set at substantially identical height levels. Subsequently, the seal member 15 is inserted into each of the notched portions 13 that are formed in the peripheral wall 6 of the case member 4 and the supporting frame 12. Next, the upper end surface of the peripheral wall 6 of the case member 4 and the upper end surface of the supporting frame 12 are set on the installation surface of the valve body 2 so as to cover the discharge outlet 2a of the valve body 2, and the seal member 15 is in pressure contact with the valve body 2. At this time, accompanying the elastic deformation of the elastic supporting portions 18, the locking hook 17 is locked by being inserted into the locking portion 2b of the valve body 2, the case member 4 is installed on the valve body 2, and thereby the fluid filter 1B for an automatic transmission is installed.

### 3. Effects of the second embodiment

According to the above, in the second embodiment, in addition to exhibiting the operation and effects that are substantially similar to those of the first embodiment, the case member 4 is installed on the valve body 2 by the locking hook 17, and thus it is possible to install the fluid filter 1B for an automatic transmission more easily on the valve body 2.

### Third embodiment

Next, a fluid filter for an automatic transmission according to a third embodiment will be explained. Note that in the fluid filter for an automatic transmission according to the third embodiment, the structural components that are substantially identical to those of the fluid filters 1A and 1B for an automatic transmission of the first and second embodiments have identical reference numerals appended thereto, and the detailed explanations thereof are omitted.

### 1. Structure of the fluid filter for an automatic transmission

As shown in FIG. 5, in the fluid filter 1C for an automatic transmission according to the third embodiment, the supporting frame 12 that constitutes the filter element 10 is fit into the predetermined space S in the inner peripheral side of the peripheral wall 6 of the case member 4. In addition, a rectangular notched portion 20 is formed on the inner peripheral side of the upper end portion of the peripheral wall 6 of the case member 4. A rubber seal member 21 is disposed inside the notched portion 20. In the state in which the case member 4 is installed on the valve body 2, this seal member 21 includes a main seal member 21a that is in press contact with the surface of the inner peripheral side of the upper end portion of the peripheral wall 6 of the case member 4, the surface of the outer peripheral side of the upper end portion of the supporting frame 12, and the surface of the valve body 2, and a press fitting portion 21b that is flat and extends downward from the main seal portion 21a, and is press fit into the predetermined space S. The press fitting portion 21b is provided on the entire periphery of the main seal member 21a.

### 2. Installation method for the fluid filter for an automatic transmission

Next, an installation method for the fluid filter 1C for an automatic transmission will be explained.
First, as shown in FIG. 6, the seal member 21 is disposed inside the notched portion 20 that is formed in the peripheral wall 6 of the case member 4. Next, the filter element 10 is disposed inside the case member 4 by fitting the supporting frame 12 into the predetermined space S on the inner peripheral side of the peripheral wall 6 of the case member 4. Thereby, the upper end surface of the peripheral wall 6 of the case member 4 and the upper end surface of the supporting frame 12 are set at substantially identical height levels, and the press fitting portion 21b of the seal member 21 is press fit into the predetermined space S. Next, the upper end surface of the peripheral wall 6 of the case member 4 and the upper end surface of the supporting frame 12 are set on the installation surface of the valve body 2 so as to cover the discharge outlet 2a of the valve body 2, and the main seal portion 21a of the seal member 21 is in pressure contact with the valve body 2. At this time, accompanying the elastic deformation of the elastic supporting portions 18, the locking hook 17 is locked by being inserted into the locking portion 2b of the valve body 2, the case member 4 is installed on the valve body 2, and thus the fluid filter 1C for an automatic transmission is installed.

### 3. Effects of the third embodiment

According to the above, in the third embodiment, in addition to exhibiting the operation and effects that are substantially identical to those of the first and second embodiments, the case member 4, the filter element 10, and the seal member 21 are integrated due to the press fitting of the press fitting portion 21b of the seal member 21 into the predetermined space S, and thus it is possible to install the fluid filter 1C for an automatic transmission more easily on the valve body 2. In addition, it is possible to prevent misalignment of the seal member 21 when installing the case member 4 on the valve body 2. Furthermore, the handling characteristics during transport, storing or the like of the fluid filter 1C for an automatic transmission are superior.
In addition, in the third embodiment, the press fitting portion 21b is provided over the entire periphery of the main seal member 21a, and thus it is possible to further increase the reliability of the seal by the seal member 21.

### Fourth embodiment

Next, a fluid filter for an automatic transmission according to a fourth embodiment will be explained. Note that in the fluid filter for an automatic transmission according to the fourth embodiment, structural components that are substantially identical to those of the fluid filters 1A and 1B for an automatic transmission according to the first and second embodiments have identical reference numerals appended thereto, and the detailed explanations thereof are omitted.

### 1. Structure of the fluid filter for an automatic transmission

As shown in FIG. 7, in a fluid filter 1D for an automatic transmission according to the fourth embodiment, the supporting frame 12 that constitutes the filter element 10 is fit into the predetermined space S in the inner peripheral side of the peripheral wall 6 of the case member 4. In addition, the upper end portion of the supporting frame 12 forms a locking portion 23 by being angled toward the outside. In addition, in the state in which the case member 4 is installed on the valve body 2, a rubber seal member 24 is formed by a main seal portion 24a that is in pressure contact with the surface of the inner peripheral side of the upper end portion of the peripheral wall 6 of the case member 4, the surface of the outer peripheral side of the upper end portion of the supporting frame 12, and the surface of the valve body 2, and a press fitting portion 24b having a substantially L-shape in longitudinal cross-section that is linked downward from the main seal portion 24a, and can be locked to the locking portions 23. The press fitting portion 24b is provided over the entire periphery of the main seal portion 24a. In addition, the press fitting portion 24b is press fit into the predetermined space S described above.

### 2. Installation method for the fluid filter for an automatic transmission

Next, an installation method for the fluid filter 1D for an automatic transmission having the structure described above will be explained.
First, as shown in FIG. 8, the press fitting portion 24b of the seal member 24 is locked on the locking portion 23 of the supporting frame 12. Next, the filter element 10 is disposed inside the case member 4 by fitting the supporting frame 12 in the inner peripheral side of the peripheral wall 6 of the case member 4 with the predetermined space S. Thereby, the upper end surface of the peripheral wall 6 of the case member 4 and the upper end surface of the supporting frame 12 are set at substantially identical height levels, and the press fitting portion 24b of the seal member 24 is press fit into the predetermined space S. Next, the upper end surface of the peripheral wall 6 of the case member 4 and the upper end surface of the supporting frame 12 are set on the installation surface of the valve body 2 so as to cover the discharge outlet 2a of the valve body 2, and the main seal portion 24a of the seal member 24 is in pressure contact with the valve body 12. At this time, accompanying the elastic deformation of the elastic supporting portions 18, the locking hook 17 is locked by being inserted into the locking portion 2b of the valve body 2, the case member 4 is installed on the valve body 2, and thereby the fluid filter 1D for an automatic transmission is installed.

### 3. Effects of the fourth embodiment

According to the above, in the fourth embodiment, in addition to exhibiting the operation and effects that are substantially identical to those of the first and second embodiments, the case member 4, the filter element 10, and the seal member 24 are integrated due to the press fitting of the press fitting portion 24b of the seal member 24 into the predetermined space S, and thus it is possible to install the fluid filter 1D for an automatic transmission more easily on the valve body 2. In addition, it is possible to prevent the misalignment of the seal member 24 when the case member 4 is installed on the valve body 2. Furthermore, the handling characteristics during transport, storing or the like of the fluid filter 1D for an automatic transmission are superior.
In addition, in the fourth embodiment, the press fitting portion 24b is provided over the entire periphery of the main seal portion 24a, and thus it is possible to further increase the reliability of the seal by the seal member 24.

Note that the present invention is not limited to the embodiments described above, and depending on the object and use, the embodiments can be variously modified within the scope of the present invention. Specifically, in the first through fourth embodiments, the filter element 10 is disposed inside the filter chamber 3 such that the upper end surface of the peripheral wall 6 of the case member 4 and the upper end surface of the supporting frame 12 are set at substantially identical height levels. However, the present invention is not limited to this, and, for example, the filter element 10 may be disposed inside the filter chamber 3 such that the upper end surface of the peripheral wall 6 of the case member 4 and the upper end surface of the supporting frame 12 are set at differing height levels.

In addition, in the first embodiment, the supporting frame 12 is fit into and fastened to the inner peripheral side of the peripheral wall 6 of the case member 4. However, the present invention is not limited to this, and, for example, the supporting frame 12 may be fit in the inner peripheral side of the peripheral wall 6 of the case member 4 with the predetermined space.

In addition, in the first embodiment, the filter element 10 and the case member 4 are integrated by press fitting and disposing the seal member 15 into the notched portions 13. However, the present invention is not limited to this, and, for example, the seal member 15 may be positioned only in a horizontal direction by being inserted and disposed in the notched portions 13.

In addition, in the third and fourth embodiments, the locking hook 17 and the elastic supporting portion 18 are provided on the case member 4. However, the present invention is not limited to this, and, for example, installation portions 7 for installation bolts (refer to FIG. 2) may be provided on the case member 4. In addition, in the first through fourth embodiments, the installation portion 7, the locking hook 17, and the elastic supporting portion 18 may be provided in combination on the case member 4.

Furthermore, in the third embodiment, the notched portion 20, in which the seal member 21 is disposed, is provided in the case member 4. However, the present invention is not limited to this, and, for example, a locking portion in which the seal member 21 is locked may be provided on the case member 4.

The invention is widely used as a filter that filters a fluid for an automatic transmission for a vehicle or the like.
A fluid filter is provided with: a case member that is installed on a valve body in which fluid paths are formed and forms a filter chamber in cooperation with the valve body; a filter element that is disposed in the filter chamber and includes a filter medium and a resin supporting frame that supports the outer peripheral edge of the filter medium; and a seal member that is in pressure contact with the surface of the inner peripheral side of the upper end portion of the peripheral wall of the case member, the surface of the outer peripheral side of the upper end portion of the supporting frame, and the surface of the valve body.

## Claims

1. A fluid filter for an automatic transmission, comprising:
a case member that is installed on a valve body in which a fluid path is formed and that forms a filter chamber in cooperation with said valve body;
a filter element that is disposed inside said filter chamber and has a filter medium and a resin supporting frame that supports an outer peripheral edge of said filter medium; and
a seal member that is in pressure contact with a surface of an inner peripheral side of an upper end portion of a peripheral wall of said case member, a surface of an outer peripheral side of an upper end portion of said supporting frame, and a surface of said valve body.

2. The fluid filter for an automatic transmission according to claim 1, wherein said seal member is disposed in a notched portion that is formed on at least one side among the inner peripheral side of the upper end portion of the peripheral wall of said case member and the outer peripheral side of the upper end portion of said supporting frame.

3. The fluid filter for an automatic transmission according to claim 1, wherein said supporting frame is fit in an inner peripheral side of the peripheral wall of said case member with a predetermined space, and said seal member has a press fitting portion that is press fit into said predetermined space.

4. The fluid filter for an automatic transmission according to any one of claims 1 to 3, wherein said case member has a locking hook that is locked to a locking portion that is provided in said valve body, and an elastic supporting portion that elastically supports said locking hook.

5. An installation method for a fluid filter for an automatic transmission comprising the steps of:
disposing a filter element having a filter medium and a resin supporting frame that supports an outer peripheral edge of said filter medium inside a case member and disposing said seal member between an inner peripheral side of an upper end portion of a peripheral wall of said case member and an outer peripheral side of an upper end portion of said supporting frame (a first step); and
installing said case member on a valve body in which a fluid path is formed such that said seal member is in pressure contact with said valve body (a second step).
